# EUROPEAN PATENT APPLICATION

(11) **EP 4 672 057 A1**
(43) Date of publication of application: **31.12.2025**
(21) Application number: 24306039.9
(22) Date of filing: 27.06.2024
(51) Int. Cl.: G06F 21/57, G06F 21/64

(54) **IN-THE-FIELD UPDATING OF AN OPERATING SYSTEM USING A DIGITAL CERTIFICATE EXTENSION**

(71) Applicant: THALES DIS FRANCE SAS, 92190 Meudon (FR)
(72) Inventor: REGNAULT, Nicolas, 13600 LA CIOTAT (FR)
(74) Representative: Lotaut, Yacine Diaw

(57) **Abstract**

Method for operating an integrated circuit chip comprising a digital certificate of an issuing authority, a manufacturing server, an issuing-authority server, and a terminal to securely update an operating system of the integrated circuit chip, the method comprising computing a first hash associated with an operating system (OS) update file; storing the first hash in the digital certificate; transmitting the digital certificate and the OS update file to the terminal; operating the terminal to transmit the digital certificate and the OS update file to the integrated circuit chip; operating the integrated circuit chip to unpack the digital certificate including the first hash; computing a second hash of the OS update file; verifying that the OS update file is authentic based on the first hash and the second hash, and if the OS update file is authentic, activating the OS update file.

## Description

### FIELD OF USE

The present invention relates, generally, to integrated circuit chips, and, more particularly, to secure updating of the operating system of embedded integrated circuit chips.

### BACKGROUND

Secure integrated circuit chips, e.g., those found in smart cards, are an increasingly important mechanism for enhancing the security of many devices. Secure integrated circuit chips are tamper-resistant integrated circuits that include many security features. Often such chips are used to store sensitive information such as account numbers, login credentials, cryptographic keys, personal user-information including biometrics.

While secure integrated circuit chips contain many security features to enhance their tamper-resistance, they are still subject to attack by forgers and hackers who seek to either impersonate legitimate users of the chips or to access, illicitly, information stored on the chips. Therefore, much like the manufacturers of old-school security documents added new security features, manufacturers of secure integrated circuit chips must from time-to-time add new security features to enhance the security of their secure integrated circuit chips. For example, if a security flaw is exposed in a cryptographic algorithm, the manufacturer of the chip may be required to provide a fix to the algorithm that corrects the identified security flaw.

Typically, patches to repair such flaws are pushed by the manufacturer to the devices that contained them. Such over-the-network patching is relatively trivial for networked devices; an operating system or application program may have a built-in mechanism to inquire over the network with a patch server to determine if there is a patch available that should or could be installed.

However, for electronic devices that do not connect to a network, patching of software is much more challenging. Consider, for example, a critical security update to an electronic passport. Electronic passport, like many other devices, are not typically in communication with a server over a network. Furthermore, even if connected to a network, it is essential that any proposed patch can be trusted to not have originated from an insecure or malicious source. There are further constraints around the size and manner of files that may be pushed to these sorts of devices due to, for instance, physical and architectural limitations.

From the foregoing it is apparent that there is a need for an improved method to provide secure update of operating system and other programs installed on secure integrated circuit chips.

### SUMMARY

Aspects of the present disclosure are directed toward a method for operating an integrated circuit chip comprising a digital certificate of an issuing authority, a manufacturing server, an issuing-authority server, and a terminal to securely patch an operating system of the integrated circuit chip, the method comprising computing a first hash associated with an operating system (OS) update file; storing the first hash in the digital certificate; transmitting the digital certificate and the OS update file to the terminal; operating the terminal to transmit the digital certificate and the OS update file to the integrated circuit chip; operating the integrated circuit chip to unpack the digital certificate including the first hash; computing a second hash of the OS update file; verifying that the OS update file is authentic based on the first hash and the second hash, and if the OS update file is authentic, activating the OS update file.

Restrictions on the size of the digital certificate limit the size of the OS Update file(s). A certificate contains a public key, a signature and meta data. Secure Elements OS do not support loading of large certificate sizes and the maximum size can be reached even if no OS Update file is set in the certificate. Due to size constraints, it is not possible to set large OS Update file into the certificate or to set several OS Update files. These size constraints are avoided through utilization of the aspects described by the present disclosure as the OS update file is able to be transmitted to the integrated circuit chip apart from the certificate while effectively leveraging the existing security infrastructure of the certificate. This solution also offers better integration with alternative OS Update load standards.

In an aspect of the present disclosure, the first hash is stored by the issuing authority in a list of authorized hashes of OS update files, said list in an extension of the digital certificate, said first hash is computed by the issuing authority by hashing the OS update file.

In an aspect of the present disclosure, the OS update file is loaded into a secure element of the integrated circuit chip with dedicated load commands.

In an aspect of the present disclosure, the second hash is computed by the secure element by hashing the loaded OS update file.

In an aspect of the present disclosure, verifying that the OS update file is authentic comprises verifying by the integrated circuit chip that the second hash matches to the first hash within the list of hashes.

In an aspect of the present disclosure, if there is no match between the second hash and the first hash, the OS update file is rejected by the integrated circuit chip.

In an aspect of the present disclosure, the integrated circuit chip is embedded in an electronic security document.

In an aspect of the present disclosure, the electronic security document is a machine-readable travel document.

An aspect of the present disclosure is directed toward an integrated circuit chip comprising a processor; and a memory connected to the processor and containing instructions executable by the processor including an operating system; and instructions to cause the processor to receive from a terminal a digital certificate and an OS update file, wherein the digital certificate includes a list of authorized hashes; unpack the digital certificate including the list of authorized hashes; compute a hash of the OS update file; verify that the OS update file is authentic by comparing the hash to the list of authorized hashes, and if the OS update file is authentic, activate the OS update file.

In an aspect of the present disclosure, the list of authorized hashes is stored in an extension of the digital certificate.

In an aspect of the present disclosure, the OS update file is loaded into a secure element of the integrated circuit chip with dedicated load commands.

In an aspect of the present disclosure, if there is no match between the hash and the list of authorized hashes, the OS update file is rejected by the integrated circuit chip.

### BRIEF DESCRIPTION OF THE DRAWINGS

FIG. 1 is an exemplary illustration of a smart code according to the present disclosure;
FIG. 2 is an exemplary illustration of a smart card with an integrated circuit inlay according to the present disclosure;
FIG. 3 is an exemplary high-level block diagram of an architecture of the integrated circuit according to the present disclosure;
FIG. 4 is an exemplary high-level block diagram of a memory of the integrated circuit according to the present disclosure;
FIG. 5 is an exemplary block diagram illustrating the architecture of a certificate according to the present disclosure;
FIG. 6 is a network diagram illustrating the flow of a data file from a manufacturer server to a device or document containing an integrated circuit chip via a network according to the present disclosure;
FIG. 7 is an exemplary illustration of the interaction between a patch and a certificate according to the present disclosure;
FIG. 8 is an exemplary flow diagram of a method according to the present disclosure; and
FIG. 9 is an exemplary data flow diagram illustrating the handling of data according to the present disclosure.

### DETAILED DESCRIPTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

The herein described technology provides a secure in-the-field software update mechanism for secure integrated circuit chips. The technology may be used for any secure integrated circuit chip applications, such as, for instance, passports, security badges, credit cards, etc. The terminology "smart card" may be used herein to refer to such a system.

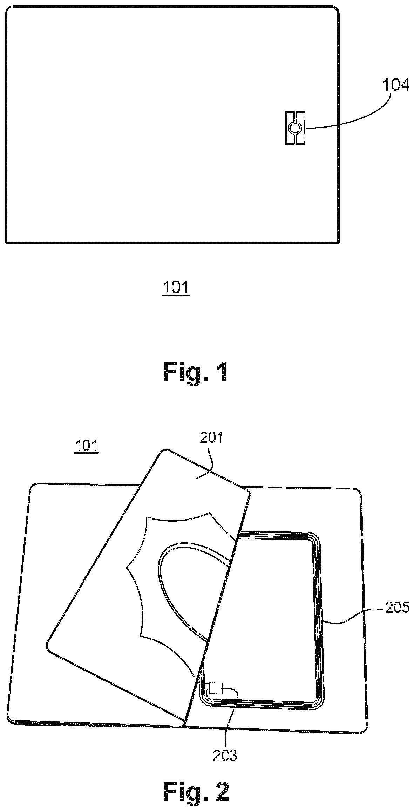

FIG. 1 is an illustration of a smart card system 101 that utilizes a secure integrated circuit chip 104. A smart card 101 may include the integrated circuit chip 104 as an inlay within the structure of the card, such as a credit card, an employee badge, a passport, etc. In an example where the smart card 101 is, for instance, a passport, the integrated circuit chip 104 and associated hardware may be integrated into a page of the passport.

FIG. 2 shows that the smart card 101 may also contain an antenna 205 connected to the integrated circuit chip 203 by which the integrated circuit chip 203 communicates with terminals. In the example shown, the antenna 205 may be sandwiched between layers of the smart card 101, for instance where the smart card 101 is laminated, between pages of the smart card 101 if the smart card 101 is in a booklet form, such as for a passport, or otherwise disposed securely within and/or attached to the smart 101.

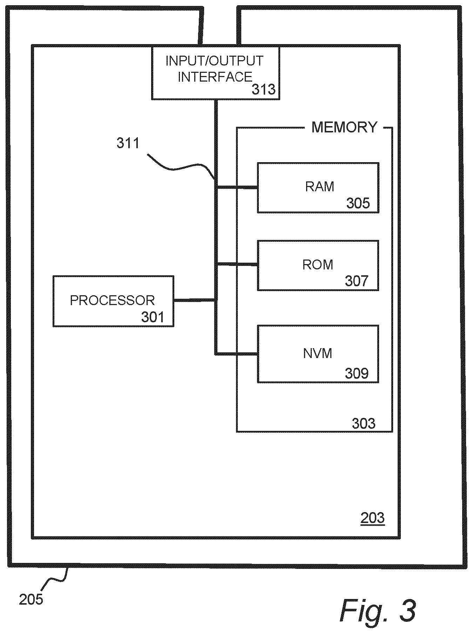

FIG. 3 is a high-level block diagram of an architecture of the integrated circuit chip 103 and the antenna 105. The integrated circuit chip 103 contains a processor 201 and a memory structure 203, which stores data and programs executable by the processor 201. The memory structure 203 may contain one or more of each of a random-access memory (RAM) 205, read-only memory (ROM) 207, and nonvolatile programmable memory (NVM) 209. The memory devices 205, 207, and 209 are connected to the processor 201 via a bus 311.

The integrated circuit chip 203 further contains an input/output interface 313 for communicating to external devices, e.g., a terminal, via the antenna 205. For contactless communication, the input/output interface 313 may communicate with a terminal over the ISO 14443 protocol.

In alternative embodiments the integrated circuit chip 203 may include electrical contacts (not shown) for communicating over a contact interface to a terminal, for example, according to the ISO-7816 protocol or the Universal Serial Bus (USB) protocol.

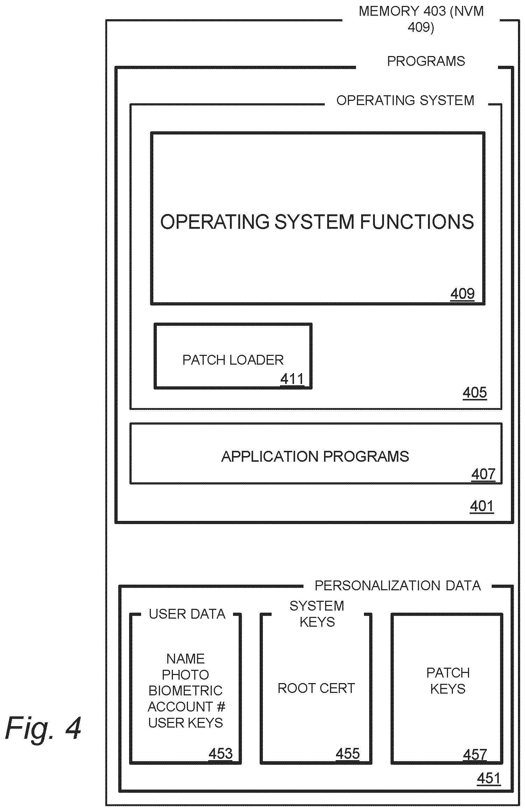

FIG. 4 is a block diagram illustrating data and programs stored in a memory 403 that corresponds to the memory 303 of FIG. 3. In a preferred embodiment, the data and programs illustrated as stored in the memory 403 are stored in an NVM 409 that corresponds to the NVM 309 of FIG. 3. However, other memory organizations are possible.

The memory 403 contains programs 401 and personalization data 451. The programs 401 are computer program instructions that cause the processor 301 to perform certain actions. The programs 401 include an operating system 405 and applications programs 407.

The operating system 405, in turn, contains a variety of operating system functions 409 and a patch loader 411. The operating system functions 409 may include, for example, a virtual machine for executing the application programs 407 and memory management functions.

The patch loader 411, which is described in greater detail below, performs functions related to receiving a patch, verifying that the patch originates with the manufacturer of the integrated circuit chip 203 (or from another trusted source), decrypting an encrypted patch, and installing the patch into the operating system 405.

The personalization data 451 may include user data 453, system keys 455, and patch keys 457. The user data 453 may include biographical information - such as name and birthdate, biometric data - such as photograph, fingerprint, and retina scans, account information, and user keys. The system keys 455 may include root certificates. The patch keys 457 include keys that are used to verify the origin of a patch file and to decrypt a patch file.

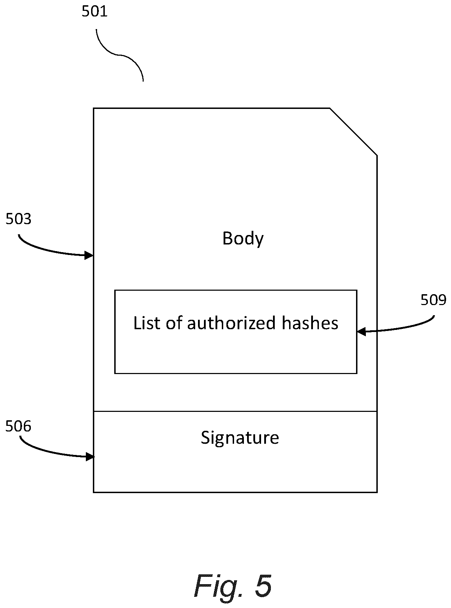

FIG. 5 is a schematic illustration of a digital certificate 501 that has a certificate body 503 and a signature 506. The certificate body 503 may include certificate extensions. For example, the certificate extension may be introduced by an object identifier followed by a sequence of context dependent data objects. The object identifier may identify to which integrated circuit chip the extension pertains, e.g., the manufacturer of the integrated circuit chip, so that integrated circuit chips to which the extension does not apply may ignore the extension. The certificate body 503 may contain a public key of a certificate authority and certain other pertinent information, e.g., validity dates.

The certificate body 503 may contain a list of authorized hashes 509. A hash function is any function that can be used to map data of arbitrary size to fixed-size values. A hash is the value returned by a hash function. Each hash in this list is computed from an OS update file which is authorized to update the smart device. The list of authorized hashes 509 may be assembled by the manufacturer, for example, and appended to the certificate 501. In an example, the list 509 may be stored in the extension of the certificate 501.

The signature 506 may specify the identity associated with the certificate 501, and for instance, the public key, such as the name of an organization or issuer. The signature is used to confirm that the certificate 501 belongs to the specific organization.

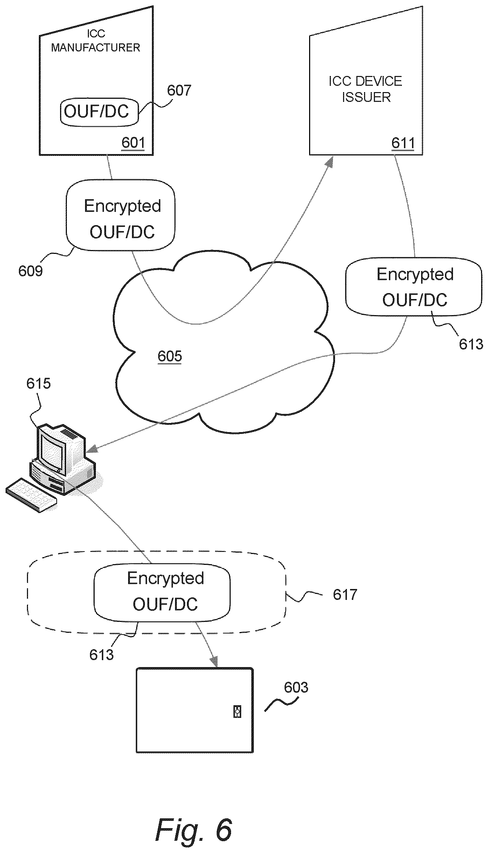

FIG. 6 is a network diagram illustrating the flow of a data file 607 from a manufacturer 601 to a device or document 603 containing an integrated circuit chip 203 (not shown) via a network 605. The data file 607 may contain at least one of a digital certificate and/or an OS update file (OUF). In order to access the OS update file, the integrated circuit chip 203 may need access to the list of authorized hashes contained by the digital certificate, and so it may be desirable to already have access to the digital certificate by the device; however, it is not necessary to transmit either the digital certificate or the OS update file in any particular order, separately, or together, as certain steps in the process may be conducted asynchronously, e.g., after a delay during which other steps were conducted.

The manufacturer, e.g., the manufacturer of the integrated circuit chip 203 creates the data file 607. The manufacturer encrypts and signs the data file 607 and transmits the signed data file 609 to an ICC device issuer 611, e.g., a national passport issuing authority. The signed data file 609 may then be uploaded to the smart device, such as during an interaction with a terminal operated by the ICC device issuer wherein a communication link 617 is established between the terminal and the smart device. The communications link may be either a contact-based communications link operating over, for example, the ISO 7816 protocol or Universal Serial Bus protocol, or a contactless communications link, e.g., near field communication (NFC) or communication over the ISO/IEC 14443 protocol. In an example where the data file 607 is an OS update file, The OS Update file(s) may be loaded into the secure element with dedicated load commands.

The terminal 515 may transmit both the digital certificate 513 and the OS update file to the device 503 as part of a terminal authentication process 517. This transmission of the OS update file may be done substantially simultaneously with the transmission of the digital certificate, i.e., during the same connection between the terminal and the device. The transmissions may be asynchronous, such that, for example, the OS Update File is first transmitted, or the OS Update File is transmitted later in the process, such as, for example, after authentication.

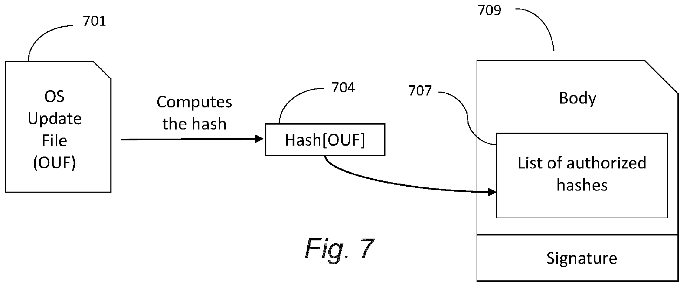

Fig. 7 demonstrates the flow of the OS Update file 701 after or before it has been loaded into the secure element. Before activating the OS Update file 701, the secure element of the smart device computes the hash of the loaded OS update file 701. The secure element verifies that the computed hash 704 corresponds to a hash set in the list 707 of authorized OS Update files into the certificate 709 (signed by card issuer). If there is a match, the OS Update file 701 is authorized by the secure element. If there is no match, the OS Update 701 is rejected by the secure element.

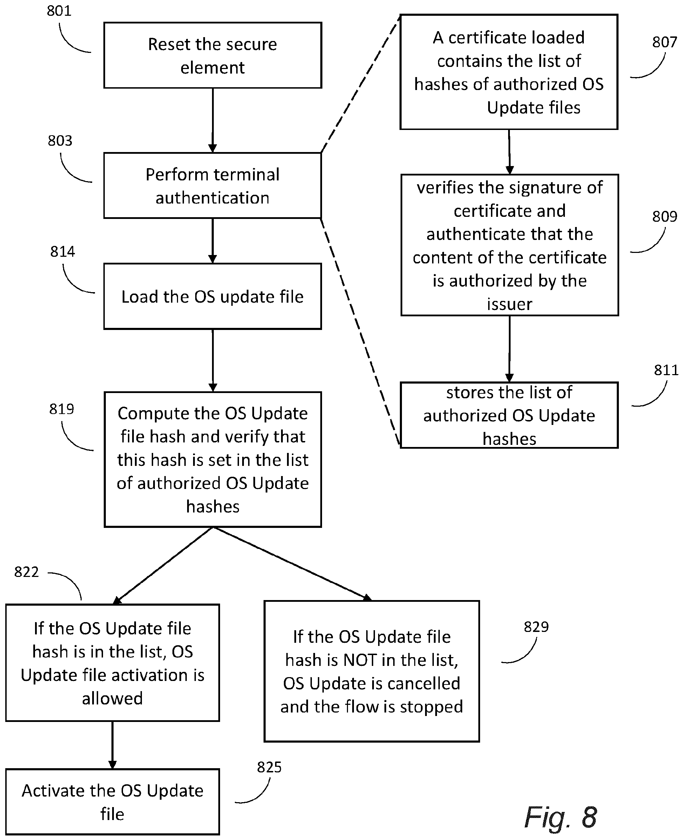

Fig. 8 is a flow chart demonstrating the process for installing the OS update file on the smart device. In step 801, the secure element of the smart device is reset. In step 803, a terminal authentication is performed. This may involve loading a certificate that contains the list of hashes of authorized O update files to the secure element, as in step 807. The secure element verifies the signature of certificate (as is typical during Terminal Authentication), and thus authenticates that the content of the certificate is authorized by the card issuer, as in step 809. In step 811, the secure element stores the list of authorized OS Update hashes (from the certificate). The OS Update file is loaded, as in step 814. Once loaded, the secure element computes the OS Update file hash and verifies that this hash is set in the list of authorized OS Update hashes, as in step 819. In step 822, ff the OS Update file hash is in the list, OS Update file activation is allowed. Thus, in step 825, the OS Update file is activated. If the OS Update file hash is NOT in the list, as in step 829, OS Update is cancelled, and the flow is immediately stopped.

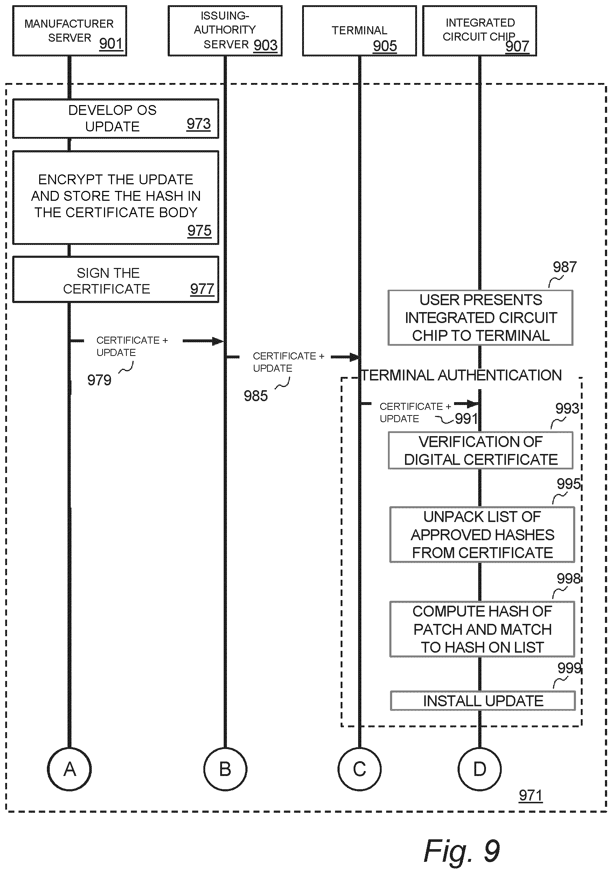

FIG. 9 demonstrates a data flow diagram of the usage phase of the life cycle of an integrated circuit chip 907. During the usage phase 971, the integrated circuit chip 907 has been incorporated into a device, e.g., a smartcard or an electronic passport. From time-to-time during the usage phase 971, the user may present the integrated circuit chip 907, or more the device in which it is incorporated, to a terminal 905.

During the usage of an integrated circuit chip 907, there may be a need or desire to push data to the integrated circuit chip 907, such as an update to the operating system by developing operating system updates, step 973.

To ensure that that update is only available to an authorized integrated circuit chip 907 and not accessible to any other parties, the manufacturer server 901 encrypts the update, step 975. The encryption hash ("first hash") is then stored in the certificate body, for example, in the form of a list of approved hashes. The manufacturer server 901 also signs the certificate, step 977.

The manufacturer server 901 transmits the signed encrypted update and certificate to the issuing-authority server 903, step 979.

If the signature verification of step 981 is successful (or not performed), the issuing-authority adds the signed encrypted update to a digital certificate, e.g., as a certificate extension to a link certificate, step 983, as described hereinabove.

The issuing-authority server 903 transmits the digital certificate and update to the terminal 905, step 985.

A user presents the integrated circuit chip 907 to the terminal 905, step 987. The terminal and integrated circuit chip 907 establish a communication channel.

During a terminal authentication phase 989, the terminal 905 transmits the digital certificate and the update to the integrated circuit chip 907, step 991.

The integrated circuit chip 907 verifies the digital certificate 991 as matching the manufacturer 901 and being signed by a trusted certificate authority, step 993. If the verification is unsuccessful, an error condition is flagged and corrective action taken (not illustrated).

The integrated circuit chip 907 unpacks the digital certificate, step 995, which includes the list of approved hashes.

The integrated circuit chip 907 computes the hash ("second hash") for the patch file, step 998. If the calculated hash is in the list of approved hashes, i.e., the first hash matches the second hash, the validation is successful and the integrated circuit chip 907 installs the update into the operating system 405, step 999. If the calculated hash is not in the list of approved hashes, the process is terminated.

From the foregoing it will be apparent that an efficient and secure mechanism for in-field installation of operating system patches in an operating system of an integrated circuit chip is provided.

While the mechanisms described herein apply to patching the operating system 405, the mechanisms may also be used in patching application programs 407. Indeed, the boundary between application programs 407 and operating system 405 may be rather blurry in some environments.

Although specific embodiments of the invention have been described and illustrated, the invention is not to be limited to the specific forms or arrangements of parts so described and illustrated. The invention is limited only by the claims.

## Claims

1. A method for operating an integrated circuit chip (104) comprising a digital certificate (501; 709) of an issuing authority, a manufacturing server (901), an issuing-authority server (903), and a terminal (905) to securely update an operating system of the integrated circuit chip (104), the method comprising:
computing a first hash associated with an operating system (OS) update file (701);
storing the first hash in the digital certificate (501; 709);
transmitting the digital certificate (501; 709) and the OS update file (701) to the terminal (905);
operating the terminal (905) to transmit the digital certificate (501; 709) and the OS update file (701) to the integrated circuit chip (104);
operating the integrated circuit chip (104) to unpack the digital certificate (501; 709) including the first hash;
computing a second hash (704) of the OS update file (701);
verifying that the OS update file (701) is authentic based on the first hash and the second hash (704), and if the OS update file (701) is authentic, activating the OS update file (701).

2. The method according to claim 1, wherein the first hash is stored in an extension of the digital certificate (501; 709).

3. The method according to claims 1 or 2, wherein the OS update file (701) is loaded into a secure element of the integrated circuit chip (104) with dedicated load commands.

4. The method according to any of the previous claims, wherein the first hash is stored in a list of authorized hashes (707) of OS update files (701) in the digital certificate (501; 709).

5. The method according to claim 4, wherein verifying that the OS update file (701) is authentic comprises verifying by the integrated circuit chip (104) that the second hash (704) matches the first hash within the list of authorized hashes (707).

6. The method according to any of the previous claims, further comprising that if there is no match between the second hash (704) and the first hash, the OS update file (701) is rejected by the integrated circuit chip (104).

7. The method according to any of the preceding claims, wherein the integrated circuit chip (104) is embedded in an electronic security document.

8. The method according to any of the preceding claims, wherein the electronic security document is a machine-readable travel document.

9. An integrated circuit chip (104) comprising:
a processor (201); and
a memory (205; 207; 209) connected to the processor and containing instructions executable by the processor (201) including an operating system; and
instructions to cause the processor (201) to:
Receive from a terminal (905) a digital certificate (501; 709) and a OS update file (701), wherein the digital certificate (501; 709) includes a list of authorized hashes (707) ;
unpack the digital certificate including the list of authorized hashes (707);
compute a hash (704) of the OS update file (701);
verify that the OS update file (701) is authentic by comparing the hash (704) to the list of authorized hashes (707), and if the OS update file (701) is authentic, activate the OS update file (701).

10. The integrated circuit chip (104) of claim 9, wherein the list of authorized hashes (707) is stored in an extension of the digital certificate (501; 709).

11. The integrated circuit chip (104) of claims 9 or 10, wherein the OS update file (701) is loaded into a secure element of the integrated circuit chip (104) with dedicated load commands.

12. The integrated circuit chip (104) of any of claims 9 to 11, further comprising that if there is no match between the hash (704) and the list of authorized hashes (707), the OS update file (701)is rejected by the integrated circuit chip (104).

13. The integrated circuit chip (104) of any of claims 9 to 12, wherein the integrated circuit chip (104) is embedded in an electronic security document.

14. The integrated circuit chip (104) of any of claims 9 to 13, wherein the electronic security document is a machine-readable travel document.
